# EUROPEAN PATENT APPLICATION

(11) **EP 4 819 598 A1**
(43) Date of publication of application: **07.10.2026**
(21) Application number: 24895393.7
(22) Date of filing: 30.04.2024
(51) Int. Cl.: H04N 7/18

(54) **ALARM SERVICE CONTROL METHOD AND APPARATUS, AND ELECTRONIC DEVICE**

(30) Priority: 29.11.2023 CN 202311638754
(71) Applicant: Zhejiang Uniview Technologies Co., Ltd., Hangzhou, Zhejiang 310051 (CN)
(72) Inventor: LV, Qiankun, Hangzhou, Zhejiang 310051 (CN)
(74) Representative: De Ros, Alberto
(86) International application number: PCT/CN2024/090899
(87) International publication number: WO 2025/112282

(57) **Abstract**

The present disclosure relates to the technical field of monitoring, and provides an alarm service control method and apparatus, and an electronic device. The method comprises: when alarm instruction information is detected, obtaining rated lamp control safety power consumption, wherein the alarm instruction information instructs to switch an imaging picture of a monitoring apparatus from a first imaging color to a second imaging color, and for light supplementing lamps, to switch from a first light supplementing lamp to a second light supplementing lamp, and one of the first light supplementing lamp and the second light supplementing lamp is a white light supplementing lamp; when it is determined that the lamp control safety power consumption is greater than switching power consumption of a dual filter switcher, controlling the white light supplementing lamp to be in an ON state, and on the basis of the lamp control safety power consumption, power consumption of the first light supplementing lamp and pre-starting power consumption of the second light supplementing lamp, controlling light intensity of the white light supplementing lamp in the ON state; and on the basis that the white light supplementing lamp is in the ON state, executing an alarm service process corresponding to the alarm instruction information..

## Description

### CROSS-REFERENCES TO RELATED APPLICATIONS

The present application claims priority to Chinese Patent Application No. 202311638754.5, filed on November 29, 2023, entitled "Alarm Service Control Method and Apparatus, and Electronic Device", which is hereby incorporated by reference in its entirety.

### FIELD

The present application relates to the field of monitoring technology, and in particular to a method and apparatus for alarm service control and an electronic device.

### BACKGROUND

With the intelligent development of security monitoring, alarm-type monitoring equipment capable of intelligent linkage alarms, such as intelligent dual-light monitoring equipment, has been widely used. Intelligent dual-light monitoring equipment may combine sound and light to trigger linkage alarms, better meeting the needs of security monitoring. However, the superposition of alarm-type services may have a significant impact on power consumption of cameras, especially instantaneous power consumption, which in turn affects product stability and leads to abnormal phenomena such as restarts.

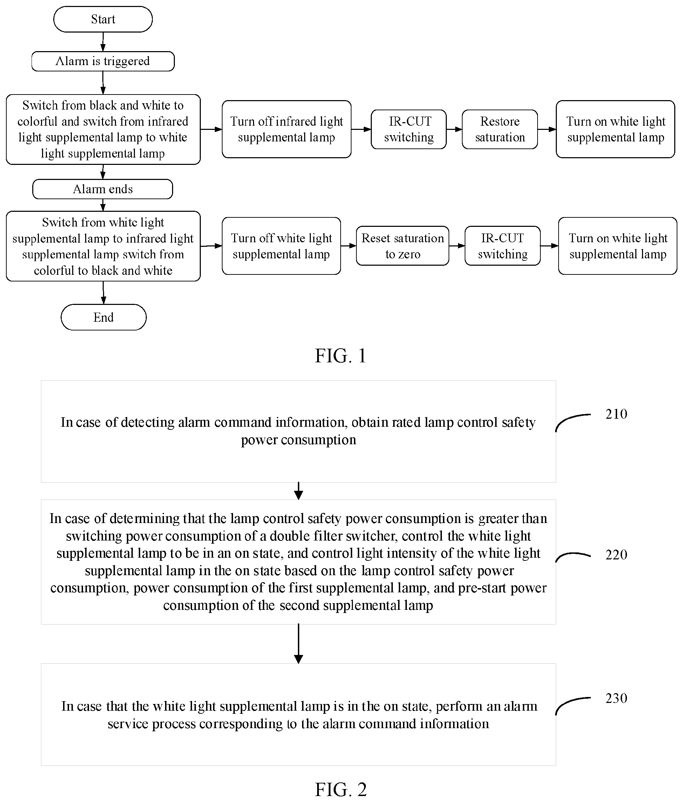

As shown in FIG. 1, taking lighting linkage as an example, after the alarm is triggered, the switching of the double filter switcher (IR-CUT), turning off or on of the infrared lights, and turning off or on of the white lights are performed in serial to ensure that there is no power consumption superposition at the same time. However, this method may degrade the image quality at the time of alarm triggering or alarm terminating, and may result in black screens of the monitoring screen. This may lead to poor image quality or even information loss of key frames after the alarm is triggered, thus affecting the monitoring effect of the alarm.

### BRIEF SUMMARY

The present application provides a method and apparatus for alarm service control, and an electronic device to solve the problem of black screen in monitoring screens when linkage alarm services are performed in serial in the related art, and to improve the image quality after the alarm is triggered by alarm-type intelligent dual-light monitoring equipment.

The present application provides a method for alarm service control, including:
in case of detecting alarm command information, obtaining rated lamp control safety power consumption; where the alarm command information is used for indicating to switch an imaging picture of a monitoring device from a first imaging color to a second imaging color, and to switch a supplemental lamp from a first supplemental lamp to a second supplemental lamp, where one of the first supplemental lamp and second supplemental lamp is a white light supplemental lamp;
in case of determining that the lamp control safety power consumption is greater than switching power consumption of a double filter switcher, controlling the white light supplemental lamp to be in an on state, and controlling light intensity of the white light supplemental lamp in the on state based on the rated lamp control safety power consumption, power consumption of the first supplemental lamp, and pre-start power consumption of the second supplemental lamp; and
in case that the white light supplemental lamp is in the on state, performing an alarm service process corresponding to the alarm command information.

The present application provides an apparatus for alarm service control, including:
a safety power consumption obtaining module, configured for, in case of detecting alarm command information, obtaining rated lamp control safety power consumption; where the alarm command information is used for indicating to switch an imaging picture of a monitoring device from a first imaging color to a second imaging color, and to switch a supplemental lamp from a first supplemental lamp to a second supplemental lamp, where one of the first supplemental lamp and second supplemental lamp is a white light supplemental lamp;
a supplemental lamp controlling module, configured for, in case of determining that the lamp control safety power consumption is greater than switching power consumption of a double filter switcher, controlling the white light supplemental lamp to be in an on state, and controlling light intensity of the white light supplemental lamp in the on state based on the rated lamp control safety power consumption, power consumption of the first supplemental lamp, and pre-start power consumption of the second supplemental lamp; and
a service performing module, configured for, in case that the white light supplemental lamp is in the on state, performing an alarm service process corresponding to the alarm command information.

The present application further provides an electronic device, including a memory, a processor, and a computer program stored in the memory and executable on the processor, where the processor executes the computer program to implement the method for alarm service control as described above.

The present application further provides a non-transitory computer-readable storage medium having a computer program stored thereon, where the computer program, when executed by a processor, implements the method for alarm service control as described above.

The present application further provides a computer program product, including a computer program that, when executed by a processor, implements the method for alarm service control as described above.

According to a method and apparatus for alarm service control and an electronic device of the present application, in case of detecting alarm command information that is used for indicating to switch an imaging picture of a monitoring device from a first imaging color to a second imaging color, and to switch a supplemental lamp from a first supplemental lamp to a second supplemental lamp, rated lamp control safety power consumption is obtained, where one of the first supplemental lamp and second supplemental lamp is a white light supplemental lamp. In case of determining that the lamp control safety power consumption is greater than switching power consumption of a double filter switcher, it means that there is headroom power consumption within a range of the lamp control safety power consumption in addition to ensuring that the alarm service corresponding to the alarm command information is completed. The headroom power consumption may be effectively used to control the white light supplemental lamp. At this time, the white light supplemental lamp is controlled to be in an on state, and light intensity of the white light supplemental lamp in the on state is controlled based on the rated lamp control safety power consumption, power consumption of the first supplemental lamp, and pre-start power consumption of the second supplemental lamp. In case that the white light supplemental lamp is in the on state, an alarm service process corresponding to the alarm command information is performed. In this way, light supplement is always available before and after the alarm command is triggered, the problem of black screen in the monitoring screen is effectively avoided, and the image quality of the alarm-type intelligent dual-light monitoring equipment is improved after the alarm is triggered.

### BRIEF DESCRIPTION OF THE DRAWINGS

FIG. 1 is a schematic flowchart of a dual-light alarm service after an alarm is triggered in the related art;
FIG. 2 is a first schematic flowchart of a method for alarm service control according to an embodiment of the present application;
FIG. 3 is a second schematic flowchart of a method for alarm service control according to an embodiment of the present application;
FIG. 4 is a third schematic flowchart of a method for alarm service control according to an embodiment of the present application;
FIG. 5 is a schematic structural diagram of an apparatus for alarm service control according to an embodiment of the present application; and
FIG. 6 is a schematic structural diagram of an electronic device according to an embodiment of the present application.

### DETAILED DESCRIPTION

The solutions according to the present application are clearly and completely described below in combination with the accompanying drawings in the embodiments of the present application. It should be noted that the described embodiments are some embodiments of the present application, rather than all the embodiments.

The alarm-type intelligent dual-light monitoring equipment may operate in an intelligent dual-light mode. At night, infrared images are displayed, and the imaging picture is black and white, supplemented by an infrared light supplemental lamp, and thus there is no light pollution. When a human body, a face, or an area intrusion alarm is detected, the imaging picture may switch from black and white to colorful. At this time, the supplemental lamp may switch from infrared light supplemental lamp to white light supplemental lamp, which has a certain light warning function and may realize light linkage alarm. In some scenarios, sound alarms and Pan-Tilt-Zoom (PTZ) linkage tracking may be combined to further ensure the authenticity and quality of the captured images after the alarm is triggered. The linkage alarm actions may all lead to increase in instantaneously superposed power consumption, which may affect the stability of the monitoring equipment and easily cause abnormal phenomena such as restarts. In addition, as shown in FIG. 1, after an alarm is triggered, the imaging picture changes from black and white to colorful and the supplemental light changes from infrared light to white light, resulting in differences in scene illumination and light source. When the alarm ends, the imaging picture changes from colorful to black and white, and the supplemental light changes from white light to infrared light. In case that there are other linkage services such as sound and PTZ tracking, these linkage services may also return to their original state.

In case of serially processing the combined services shown in FIG. 1 or the decreasing light intensity, the image quality at the critical moment of alarm triggering may be reduced, and black screen phenomenon may easily occur, resulting in the loss of key frame information. The images nearby the critical moment of alarm triggering may also have long-term brightness fluctuations, overexposure or underexposure, etc. Moreover, insufficient intensity of supplemental light may also lead to a decrease in the overall image clarity, as well as problems such as motion blur and large noise, resulting in a decrease in image quality.

Based on this, in the embodiments of the present application, by using the lamp control safety power consumption that is rated based on image quality, the instantaneous power consumption for lighting linkage services is adaptively allocated after the alarm is triggered or ended, ensuring that supplemental lighting is available throughout the entire process before and after alarm command information is triggered, avoiding the occurrence of black screen phenomenon to improve image quality and alarm effect at critical moments when alarm command information is triggered.

A method for alarm service control of the present application is described below with reference to FIGS. 2 to 4. The method for alarm service control may be performed by monitoring equipment or electronic devices such as terminal devices or servers that communicate with the monitoring equipment. The terminal devices may include mobile phones, computers, in-vehicle devices, tablets, wearable devices, etc.; the servers may include independent servers, cluster servers or cloud servers, etc.; and the monitoring equipment may be intelligent dual-light monitoring equipment. The method for alarm service control may also be performed by an apparatus for alarm service control installed in electronic devices, which may be implemented through software, hardware, or a combination of both.

FIG. 2 is a first schematic flowchart of a method for alarm service control method according to an embodiment of the present application. As shown in FIG. 2, the method for alarm service control may include the following steps 210 to 230.

Step 210: in case of detecting alarm command information, obtain rated lamp control safety power consumption.

The alarm command information is used for indicating to switch an imaging picture of a monitoring device from a first imaging color to a second imaging color, and to switch a supplemental lamp from a first supplemental lamp to a second supplemental lamp, where one of the first supplemental lamp and second supplemental lamp is a white light supplemental lamp, and the other is an infrared light supplemental lamp.

The alarm command information may include alarm triggering command when an alarm is triggered or alarm termination command when an alarm is ended. The alarm command information may be determined based on the analysis of surveillance images collected by the monitoring equipment. For example, stranger detection may be performed on the surveillance images of the monitored area, or human or face detection may be performed on the surveillance images of the monitored area with a set warning zone. When a stranger is detected in the surveillance image or a face or human body appears in the warning zone of the surveillance image, it is determined that the alarm trigger command is detected; when a stranger or human body in the surveillance image is detected to leave the monitored area or the set warning zone, it is determined that an alarm termination command is detected.

When the alarm command information is an alarm trigger command, the first imaging color is black and white, the second imaging color is colorful, the first supplemental lamp is an infrared light supplemental lamp, and the second supplemental lamp is a white light supplemental lamp. That is, the alarm command information is used for indicating to switch the imaging picture of the monitoring device from black and white to colorful, and to switch the supplemental lamp from infrared light supplemental lamp to white light supplemental lamp. When the alarm command information is an alarm termination command, the first imaging color is colorful, the second imaging color is black and white, the first supplemental lamp is a white light supplemental lamp, and the second supplemental lamp is an infrared light supplemental lamp. That is, the alarm command information is used for indicating to switch the imaging picture of the monitoring device from colorful to black and white, and to switch the supplemental lamp from white light supplemental lamp to infrared light supplemental lamp.

For intelligent dual-light monitoring equipment, its power consumption mainly origins from basic power consumption, IR-CUT switching power consumption, power consumption of the infrared light supplemental lamp, and power consumption of the white light supplemental lamp. If other linkage services such as microphones, speakers, and PTZ tracking are superposed, power consumption of these linkage services is also included. The power consumption originated from IR-CUT filter switching, turning on/off the supplemental lamp, the speaker and the PTZ tracking is relatively high, but it is not always present. Therefore, the total power consumption of the monitoring equipment is not the sum of these power consumption sources, but rather changes with the real-time business within a certain range. For example, the instantaneous power of turning on the supplemental lamp in combination with IR-CUT switching may cause the instantaneous power consumption to exceed the limit.

Based on this, in the embodiments of the present application, the power consumption of each module with a superposed power consumption service may be determined by analyzing the alarm service process and testing the power consumption of the module with superposition. For modules such as sound and supplemental lamp that do not operate at their maximum power consumption in real time, since their power consumption may change in real time, the maximum safety power consumption of these modules may be rated, and then these modules may be controlled in stages.

Specifically, dual-light alarm services include the superposition of IR-CUT switching and supplemental lamps. In combination with FIG. 1, the process of dual-light alarm service may be analyzed. When an alarm is triggered, an order in which IR-CUT switching, infrared light supplemental lamp and white light supplemental lamp are operated may cause problems such as black screen, reddish color and overexposure in the imaging picture, resulting in a decrease of image quality. Moreover, the order in which these three are operated may also directly affect the instantaneous power consumption of the equipment. Once the instantaneous power consumption exceeds a standard value, the equipment may be crashed and the normal operation of the monitoring service is affected. In addition, during the operation of the monitoring equipment, the intensity of the supplemental lamp is related to the illuminance of the scene, and thus the monitoring equipment does not operate at the maximum intensity in real time. Therefore, in the embodiments of the present application, the lamp control safety power consumption may be rated first, and then the rated lamp control safety power consumption may be saved. In case of detecting alarm command information, the lamp control safety power consumption may be obtained.

During the rating of lamp control safety power consumption, the safety power consumption value may be measured based on the combination of each service module in the dual-light alarm service. In dual-light alarm services, variable power consumption includes the light intensity of white light supplemental lamp and infrared light supplemental lamp. During testing, power consumption may be rated based on image quality and/or service configuration, rather than simply taking a maximum power consumption value of each module. Furthermore, each service module is not executed at the same time, so there is a safety power consumption range.

For example, in dual-light alarm services, an allowable maximum current value when the infrared light supplemental lamp is superimposed on the white light supplemental lamp may be tested during the switching of IR-CUT filter based on an allowable maximum power consumption of the monitoring equipment. This maximum current value corresponds to a safety power consumption value of a supplemental lamp. A sum of the safety power consumption value of the supplemental lamp and the switching power of IR-CUT filter may be determined as the lamp control safety power consumption, or the maximum current value may be used to represent the lamp control safety power consumption.

It should be understood that the rated lamp control safety power consumption may be expressed by "safety power consumption value of supplemental lamp + switching power consumption of IR-CUT filter". During the real-time operation of the monitoring equipment, after the alarm is triggered, the instantaneous power consumption when IR-CUT switching and supplemental lamps are superimposed may be expressed by "switching power consumption of IR-CUT filter + current power consumption of infrared light supplemental lamp + power consumption of pre-start white light supplemental lamp". Since both the rated lamp control safety power consumption and the instantaneous power consumption during the real-time operation of the monitoring equipment include the switching power consumption of IR-CUT filter, they may be counteracted each other out in the power consumption comparison. Therefore, the safety power consumption value of supplemental lamp may be used to represent the lamp control safety power consumption. In practical applications, the sum of the current power consumption of infrared light supplemental lamp and the power consumption of pre-start white light supplemental lamp detected in real time may be compared with the safety power consumption value of supplemental lamp to determine whether the superimposed instantaneous power consumption exceeds the lamp control safety power consumption.

For example, in a scenario where at least one of the following linkage alarm services is further superimposed into the dual-light alarm service: PTZ linkage tracking, sound linkage alarm, and day/night switching, the above rating process may be performed on the basis of enabling the superimposed linkage alarm service when the lamp control safety power consumption is rated. That is, on the basis of enabling the superimposed linkage alarm service, the safety power consumption value of the supplemental lamp may be tested when the infrared light supplemental lamp is superimposed into the white light supplemental lamp during the switching of IR-CUT filter, and then the lamp control safety power consumption is determined. It should be understood that the determined lamp control safety power consumption in this scenario is less than the lamp control safety power consumption when there are no additional linkage alarm services such as PTZ linkage tracking, sound linkage alarm and day/night switching.

Based on this, in an exemplary embodiment, when an alarm command information is detected, it may first be determined whether the dual-light alarm service is superimposed with an additional linkage alarm service. If an additional linkage alarm service is not superimposed, the lamp control safety power consumption corresponding to the dual-light alarm service is obtained; if an additional linkage alarm service is superimposed, the rated lamp control safety power consumption when the additional linkage alarm service is superimposed may be obtained.

Step 220: in case of determining that the lamp control safety power consumption is greater than switching power consumption of a double filter switcher, control the white light supplemental lamp to be in an on state, and control light intensity of the white light supplemental lamp in the on state based on the lamp control safety power consumption, power consumption of the first supplemental lamp, and pre-start power consumption of the second supplemental lamp.

When the alarm command information is the alarm trigger command when the alarm is triggered, the first supplemental lamp is an infrared light supplemental lamp and the second supplemental lamp is a white light supplemental lamp. The supplemental lamp needs to be switched from the infrared light supplemental lamp to the white light supplemental lamp. At this time, it can be determined whether the lamp control safety power consumption is greater than the switching power consumption of IR-CUT filter. If the lamp control safety power consumption is greater than the switching power consumption of IR-CUT filter, it means that there is headroom power consumption within a range of the lamp control safety power consumption in addition to ensuring completion of the alarm service corresponding to the alarm command information. The headroom power consumption may be used to control the light intensity of the white light supplemental lamp in the on state to ensure that the superimposed total power consumption is within the range of the lamp control safety power consumption after the white light supplemental lamp is turned on. Specifically, the white light supplemental lamp may be turned on, and the headroom power consumption may be determined based on the lamp control safety power consumption, the current power consumption of the infrared light, and the pre-turn-on power consumption of the white light supplemental lamp. The headroom power consumption may then be used to control the light intensity of the white light supplemental lamp in the on state before the infrared light supplemental lamp is turned off. In case that the lamp control safety power consumption is less than or equal to the switching power consumption of the IR-CUT filter, the control may be performed according to the process after the alarm is triggered as shown in FIG. 1, that is, sequentially performing the process of: turning off the infrared light supplemental lamp, switching the IR-CUT filter to not allow infrared light to pass through, restoring the image saturation to the saturation of the color image, and turning on the white light supplemental lamp.

When the alarm command information is an alarm termination command, the first supplemental lamp is a white light supplemental lamp, and the second supplemental lamp is an infrared light supplemental lamp. The supplemental lamp needs to be switched from white light supplemental lamp to infrared light supplemental lamp, meaning the white light supplemental lamp is currently in the on state. If it is determined that the lamp control safety power consumption is greater than the switching power consumption of IR-CUT filter, then a headroom power consumption may be determined based on the lamp control safety power consumption, the current power consumption of the white light supplemental lamp, and the pre-start power consumption of the infrared light supplemental lamp. This headroom power consumption may then be used to adjust the current light intensity of the white light supplemental lamp. In case that the lamp control safety power consumption is less than or equal to the switching power consumption of the IR-CUT filter, the control may be performed according to the process after the alarm is ended as shown in FIG. 1, that is, sequentially performing the process of: turning off the white light supplemental lamp, switching the IR-CUT filter to allow infrared light to pass through, resetting image saturation to zero, and turning on the infrared light supplemental lamp.

Step 230: in case that the white light supplemental lamp is in the on state, perform alarm service process corresponding to the alarm command information.

In an exemplary embodiment, in case that the alarm command information is an alarm trigger command, performing the alarm service process corresponding to the alarm command information may include: turning off the infrared light supplemental lamp; controlling the double filter switcher to perform a first switching action to cut off the infrared light and restore the saturation of the imaging picture to the saturation of the color image. In this way, the supplemental lamp may be switched from infrared light supplemental lamp to white light supplemental lamp, and the imaging picture of the monitoring equipment may be switched from black and white to colorful to meet the linkage alarm requirements after the alarm is triggered.

The double filter switcher includes two filters: one is an infrared cut filter or an infrared absorption filter, and the other is a full transmittance spectral filter. Controlling the double filter switcher to perform the first switching action is to switch the filter to either an infrared cut filter or an infrared absorption filter to cut infrared light, i.e., not allowing infrared light to pass through.

While the double filter switcher is controlled to perform the first switching action to cut off the infrared light, the light intensity of the white light supplemental lamp may also be enhanced based on power consumption released after the infrared light supplemental lamp is turned off, that is, the increased light intensity does not exceed the power consumption released after the infrared light supplemental lamp is turned off. The increased light intensity may be determined by automatic exposure (AE) adjustment, such as by an algorithm that uses equal exposure.

In an exemplary embodiment, when the alarm command information is an alarm termination command, the alarm service process corresponding to the alarm command information may include: controlling the double filter switcher to perform a second switching action to allow infrared light to pass through; determining the second target light intensity of the infrared light supplemental lamp based on the lamp control safety power consumption and the current power consumption of the white light supplemental lamp; turning on the infrared light supplemental lamp and controlling the light intensity of the infrared light supplemental lamp to the second target light intensity; turning off the white light supplemental lamp and resetting the saturation of the imaging picture to zero. In this way, the supplemental lamp may be switched from a white light supplemental lamp to an infrared light supplemental lamp, and the imaging picture of the monitoring equipment may be switched from colorful to black and white.

Controlling the double filter switcher to perform the second switching action is to switch the filter to a full transmittance spectral filter to allow infrared light to pass through.

For example, determining the second target light intensity of the infrared light supplemental lamp based on the lamp control safety power consumption and the current power consumption of the white light supplemental lamp may include: determining a power consumption difference between the supplemental lamp and the current power consumption of the white light supplemental lamp; and determining the light intensity corresponding to the power consumption difference as the second target light intensity.

According to the method for alarm service control of the present application, in case of detecting alarm command information that is used for indicating to switch an imaging picture of a monitoring device from a first imaging color to a second imaging color, and to switch a supplemental lamp from a first supplemental lamp to a second supplemental lamp, rated lamp control safety power consumption is obtained, where one of the first supplemental lamp and second supplemental lamp is a white light supplemental lamp. In case of determining that the lamp control safety power consumption is greater than switching power consumption of a double filter switcher, it means that there is headroom power consumption within a range of the lamp control safety power consumption in addition to ensuring completion of the alarm service corresponding to the alarm command information. The headroom power consumption may be effectively used to control the white light supplemental lamp. At this time, the white light supplemental lamp is controlled to be in an on state, and light intensity of the white light supplemental lamp in the on state is controlled based on the rated lamp control safety power consumption, power consumption of the first supplemental lamp, and pre-start power consumption of the second supplemental lamp. In case that the white light supplemental lamp is in the on state, alarm service process corresponding to the alarm command information is performed. In this way, supplemental lighting is always available before and after the alarm command is triggered, the problem of black screen in the monitoring screen is effectively avoided, and the image quality of the alarm-type intelligent dual-light monitoring equipment after the alarm is triggered is improved.

Based on the method for alarm service control of the embodiment corresponding to FIG. 1, when the alarm command information is an alarm trigger command, that is, in the scenario of alarm triggering, the first supplemental lamp is an infrared light supplemental lamp, the second supplemental lamp is a white light supplemental lamp, the alarm service includes a dual-light alarm service, which requires switching the image from black and white to colorful and switching the supplemental lamp from infrared light supplemental lamp to white light supplemental lamp. The corresponding alarm service process includes turning off the infrared light supplemental lamp, switching the IR-CUT filter, changing the imaging picture to be colorful and turning on the white light supplemental lamp. In the embodiments of the present application, before the infrared light supplemental lamp is turned off, it may be determined whether there is a headroom power consumption to simultaneously turn on the white light supplemental lamp based on the lamp control safety power consumption, the power consumption of the first supplemental lamp, and the pre-start power consumption of the second supplemental lamp. If there is the headroom power consumption, the white light supplemental lamp may be turned on simultaneously, and the light intensity of the white light supplemental lamp in the on state may be controlled in stages based on the headroom power consumption. Then, in case that the white light supplemental lamp is turned on, the following processes are performed, including: turning off the infrared light, switching the IR-CUT filter, changing the imaging picture to colorful, and keeping the white light supplemental lamp being turned on.

Controlling the light intensity of the white light supplemental lamp in the on state based on the lamp control safety power consumption, the power consumption of the first supplemental lamp, and the pre-start power consumption of the second supplemental lamp may include: in case that first total power consumption of the power consumption of the first supplemental lamp, the pre-start power consumption of the second supplemental lamp and the switching power consumption is less than the lamp control safety power consumption, determining the light intensity corresponding to the pre-start power consumption of the second supplemental lamp as a first target light intensity of the white light supplemental lamp (e.g. the second supplemental lamp), and controlling the light intensity of the white light supplemental lamp in the on state to be the first target light intensity before the infrared light supplemental lamp (e.g. the first supplemental lamp) is turned off.

The pre-start power consumption of the second supplemental lamp may be determined by using the AE algorithm based on the current ambient illuminance to ensure the quality of the imaging picture.

Further, the method further includes: in case that the first total power consumption is greater than or equal to the lamp control safety power consumption, determining safety headroom power consumption of the white light supplemental lamp (e.g. the second supplemental lamp) based on the lamp control safety power consumption and current power consumption of the first supplemental lamp; and determining the first target light intensity of the white light supplemental lamp based on the safety headroom power consumption and the pre-start power consumption of the second supplemental lamp, and controlling the light intensity of the white light supplemental lamp in the on state to be the first target light intensity before the infrared light supplemental lamp is turned off.

For example, determining safety headroom power consumption of the white light supplemental lamp based on the lamp control safety power consumption and current power consumption of the first supplemental lamp may include: if the fourth total power consumption of the current power consumption of the first supplemental lamp and the switching power consumption of the IR-CUT filter is determined to be less than the lamp control safety power consumption, determining a first power consumption difference between the lamp control safety power consumption and the current power consumption of the first supplemental lamp, and determining the first power consumption difference as the safety headroom power consumption of the white light supplemental lamp; if the fourth total power consumption between the current power consumption of the first supplemental lamp and the switching power consumption of the IR-CUT filter is determined to be greater than or equal to the lamp control safety power consumption, and the lamp control safety power consumption is greater than the switching power consumption of the IR-CUT filter, determining a fifth total power consumption of a minimum on-state power consumption of the white light supplemental lamp and the current power consumption of the first supplemental lamp and the switching power consumption of the IR-CUT filter; determining a second power consumption difference between the lamp control safety power consumption and the fifth total power consumption; determining the second power consumption difference as the power consumption corresponding to the light intensity decrement of the first supplemental lamp, and determining the minimum on-state power consumption of the white light supplemental lamp as the safety headroom power consumption of the white light supplemental lamp.

For example, determining the first target light intensity of the white light supplemental lamp based on the safety headroom power consumption and the pre-start power consumption of the second supplemental lamp may include: determining light intensity corresponding to a minimum value between the safety headroom power consumption and the pre-start power consumption of the second supplemental lamp as the first target light intensity.

In this way, in case that an alarm trigger is detected, the light intensity of the white light supplemental lamp may be adaptively controlled in stages based on the lamp control safety power consumption, the current power consumption of the first supplemental lamp, and the pre-start power consumption of the second supplemental lamp. This ensures that the white light supplemental lamp operates in the optimal state allowed by the power consumption, providing the best supplemental light effect for the imaging picture and guaranteeing the quality of the imaging picture.

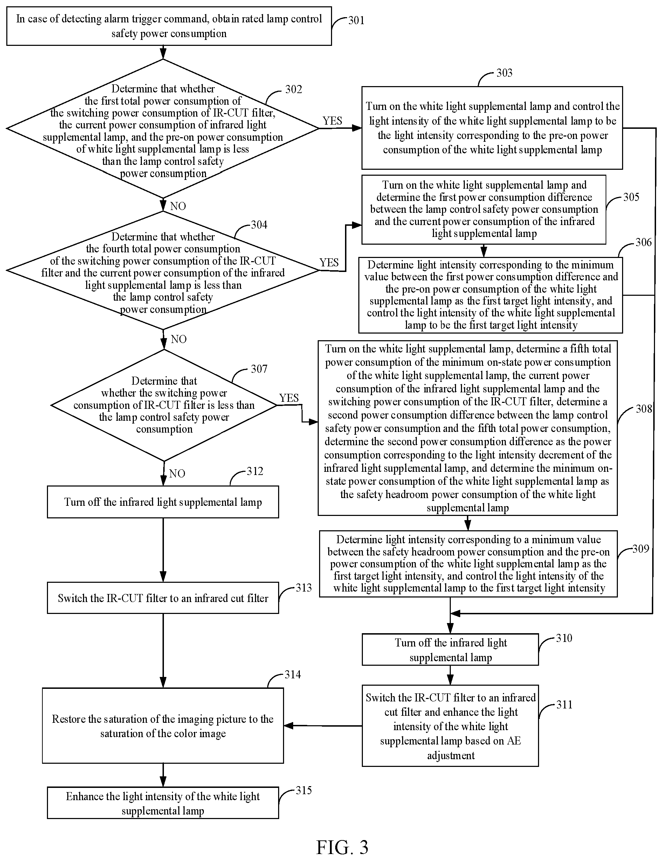

For example, a scenario where the alarm service includes a dual-light alarm service, the imaging picture needs to be switched from black and white to colorful and the supplemental lamp needs to be switched from infrared light supplemental lamp to white light supplemental lamp is taken as an example. FIG. 3 is a second schematic flowchart of a method for alarm service control according to an embodiment of the present application. As shown in FIG. 3, the method for alarm service control may include the following steps 301 to 315.

Step 301: in case of detecting alarm trigger command, obtain rated lamp control safety power consumption.

Step 302: determine that whether the first total power consumption of the switching power consumption of IR-CUT filter, the current power consumption of infrared light supplemental lamp, and the pre-start power consumption of white light supplemental lamp is less than the lamp control safety power consumption.

If the first total power consumption is less than the lamp control safety power consumption, the method then proceeds to step 303; otherwise, proceed to step 304.

Step 303: turn on the white light supplemental lamp and control the light intensity of the white light supplemental lamp to be the light intensity corresponding to the pre-start power consumption of the white light supplemental lamp. The method then proceeds to step 310.

Step 304: determine that whether the fourth total power consumption of the switching power consumption of the IR-CUT filter and the current power consumption of the infrared light supplemental lamp is less than the lamp control safety power consumption.

If the fourth total power consumption is less than the lamp control safety power consumption, the method then proceeds to step 305; otherwise, proceed to step 307.

Step 305: turn on the white light supplemental lamp and determine the first power consumption difference between the lamp control safety power consumption and the current power consumption of the infrared light supplemental lamp.

Step 306: determine light intensity corresponding to the minimum value between the first power consumption difference and the pre-start power consumption of the white light supplemental lamp as the first target light intensity, and control the light intensity of the white light supplemental lamp to be the first target light intensity. The method then proceeds proceed to step 310.

Step 307: determine that whether the switching power consumption of IR-CUT filter is less than the lamp control safety power consumption.

If the switching power consumption of IR-CUT filter is less than the lamp control safety power consumption, the method then proceeds to step 308; otherwise, proceed to step 312.

Step 308: turn on the white light supplemental lamp, determine a fifth total power consumption of the minimum on-state power consumption of the white light supplemental lamp, the current power consumption of the infrared light supplemental lamp and the switching power consumption of the IR-CUT filter, determine a second power consumption difference between the lamp control safety power consumption and the fifth total power consumption, determine the second power consumption difference as the power consumption corresponding to the light intensity decrement of the infrared light supplemental lamp, and determine the minimum on-state power consumption of the white light supplemental lamp as the safety headroom power consumption of the white light supplemental lamp.

Step 309: determine light intensity corresponding to a minimum value between the safety headroom power consumption and the pre-start power consumption of the white light supplemental lamp as the first target light intensity, and control the light intensity of the white light supplemental lamp to the first target light intensity. The method then proceeds to step 310.

Step 310: turn off the infrared light supplemental lamp.

Step 311: switch the IR-CUT filter to an infrared cut filter and enhance the light intensity of the white light supplemental lamp based on AE adjustment. The method then proceeds to step 314.

The increased light intensity shall not exceed the power consumption released after the infrared light supplemental lamp is turned off. When the infrared cut filter is in operation, infrared light is not allowed to pass through, which may avoid color distortion in the environment of white light supplemental lamps and enable the image sensor of the monitoring equipment to restore true color.

Step 312: turn off the infrared light supplemental lamp.

Step 313: switch the IR-CUT filter to an infrared cut filter.

Step 314: restore the saturation of the imaging picture to the saturation of the color image.

Step 315: enhance the light intensity of the white light supplemental lamp.

Specifically, the light intensity of the white light supplemental lamp may be enhanced by adjusting the AE or by using equal exposure.

The method for alarm service control according to the present application may adaptively control the lamps in stages by utilizing the rated lamp control safety power consumption based on image quality when an alarm is detected. Specifically, in the first stage, the white light supplemental lamp is turned on and the light intensity of the white light supplemental lamp is adaptively controlled. Then, in the second stage, the IR-CUT filter is switched, white light supplemental lamp is supplemented, and saturation restoration are performed. Finally, in the third stage, supplementing of white light supplemental lamp is enhanced, so that the imaging picture is supplemented in the entire process, avoiding the problem of black screen and improving the image quality of the imaging picture. Moreover, the light intensity of the supplemental lamp may be adaptively adjusted according to the real-time power consumption, which improves the exposure smoothness when the alarm is triggered and further improves the image quality of the imaging picture.

Based on the method for alarm service control of the embodiments corresponding to FIG. 1, when the alarm command information is an alarm termination command, that is, when the alarm is ended, the first supplemental lamp is a white light supplemental lamp and the second supplemental lamp is an infrared light supplemental lamp. The alarm service includes a dual-light alarm service, which requires switching the imaging picture from colorful to black and white and switching the supplemental lamp from white light supplemental lamp to infrared light supplemental lamp. The corresponding alarm service process includes switching the IR-CUT filter, turning on the infrared light supplemental lamp, turning off the white light supplemental lamp, and resetting the saturation to zero . Before switching to IR-CUT filter, it can be determined whether there is a headroom power consumption to simultaneously turn on the white light supplemental lamp based on the lamp control safety power consumption, the power consumption of the supplemental lamp, and the pre-start power consumption of the second supplemental lamp. If there is the headroom power consumption, the light intensity of the white light supplemental lamp may be controlled in stages based on the headroom power consumption. Then, based on the operation of the white light supplemental lamp, the following processes are performed, including: switching the IR-CUT filter, turning on the infrared light supplemental lamp, turning off the white light supplemental lamp, and resetting the saturation to zero.

Specifically, controlling the light intensity of the white light supplemental lamp in the on state based on the lamp control safety power consumption, the power consumption of the first supplemental lamp, and the pre-start power consumption of the second supplemental lamp may include: when the second total power consumption of the power consumption of the first supplemental lamp, the pre-start power consumption of the second supplemental lamp, and the switching power consumption is less than the lamp control safety power consumption, determining the pre-start power consumption of the second supplemental lamp as the power consumption increment of the white light supplemental lamp, determining the first light intensity increment of the white light supplemental lamp based on the power consumption increment; and enhancing the light intensity of the white light supplemental lamp based on the first light intensity increment to obtain the light intensity of the white light supplemental lamp in the on state.

The pre-start power consumption of the second supplemental lamp may be determined based on the current ambient illuminance by using the AE algorithm to ensure the quality of the imaging picture.

The method further includes: in case that the second total power consumption is greater than or equal to the lamp control safety power consumption, and a third total power consumption of the power consumption of the first supplemental lamp and the switching power consumption is less than the lamp control safety power consumption, determining a second light intensity increment of the white light supplemental lamp based on the lamp control safety power consumption and the third total power consumption; and enhancing the light intensity of the white light supplemental lamp based on the second light intensity increment to obtain the light intensity of the white light supplemental lamp in the on state.

Determining the second light intensity increment of the white light supplemental lamp based on the lamp control safety power consumption and the third total power consumption includes: determining a third power consumption difference between the lamp control safety power consumption and the third total power consumption, and determining the third power consumption difference as the second light intensity increment of the white light supplemental lamp.

The method further includes: in case that the third total power consumption is greater than or equal to the lamp control safety power consumption, determining a light intensity decrement of the white light supplemental lamp based on the lamp control safety power consumption and the third total power consumption; and decreasing the light intensity of the white light supplemental lamp based on the light intensity decrement to obtain the light intensity of the white light supplemental lamp in the on state.

Determining the light intensity decrement of the white light supplemental lamp based on the lamp control safety power consumption and the third total power consumption includes: determining a fourth power consumption difference between the third total power consumption and the lamp control safety power consumption, and determining the fourth power consumption difference as the light intensity decrement of the white light supplemental lamp.

In this way, when an alarm end is detected, the light intensity of the white light supplemental lamp may be adaptively controlled in stages based on the lamp control safety power consumption, the current power consumption of the first supplemental lamp, and the pre-start power consumption of the second supplemental lamp. This ensures that the white light supplemental lamp operates in the optimal state allowed by the power consumption, providing the best supplemental light effect for the imaging picture and guaranteeing the image quality of the imaging picture.

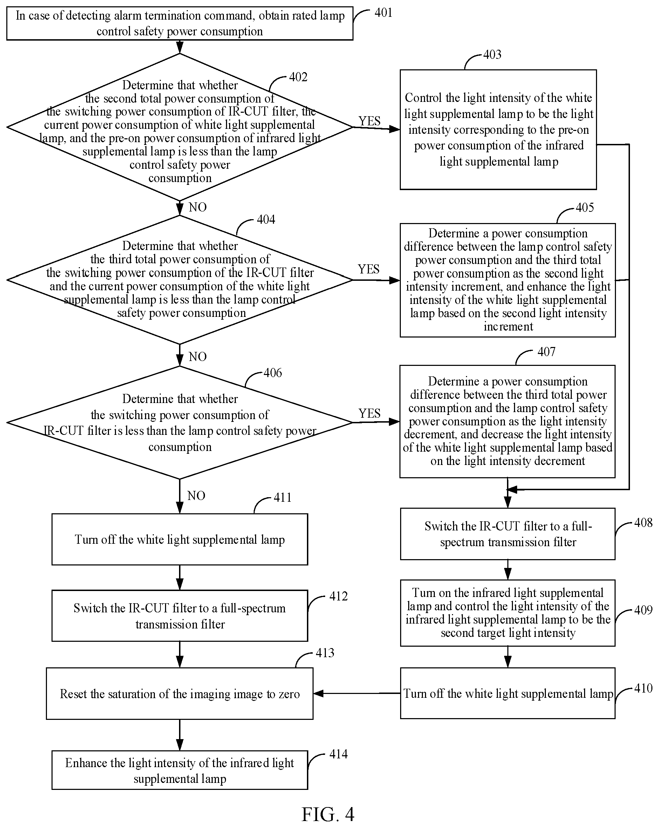

For example, a scenario where the alarm service includes a dual-light alarm service, the imaging picture needs to be switched from colorful to black and white and the supplemental lamp needs to be switched from white light supplemental lamp to infrared light supplemental lamp is taken as an example.. FIG. 4 is a third schematic flowchart of a method for alarm service control according to an embodiment of the present application. As shown in FIG. 4, the method for alarm service control may include the following steps 401 to 414.

Step 401: in case of detecting alarm termination command, obtain rated lamp control safety power consumption.

Step 402: determine that whether the second total power consumption of the switching power consumption of IR-CUT filter, the current power consumption of white light supplemental lamp, and the pre-start power consumption of infrared light supplemental lamp is less than the lamp control safety power consumption.

If the second total power consumption is less than the lamp control safety power consumption, the method then proceeds to step 403; otherwise, proceeds to step 404.

Step 403: control the light intensity of the white light supplemental lamp to be the light intensity corresponding to the pre-start power consumption of the infrared light supplemental lamp. The method then proceeds to step 408.

Step 404: determine that whether the third total power consumption of the switching power consumption of the IR-CUT filter and the current power consumption of the white light supplemental lamp is less than the lamp control safety power consumption.

If the third total power consumption is less than the lamp control safety power consumption, The method then proceeds to step 405; otherwise, proceeds to step 406.

Step 405: determine a power consumption difference between the lamp control safety power consumption and the third total power consumption as the second light intensity increment, and enhance the light intensity of the white light supplemental lamp based on the second light intensity increment. The method then proceeds to step 408.

Step 406: determine that whether the switching power consumption of IR-CUT filter is less than the lamp control safety power consumption.

If the switching power consumption of IR-CUT filter is less than the lamp control safety power consumption, The method then proceeds to step 407; otherwise, proceeds to step 411.

Step 407: determine a power consumption difference between the third total power consumption and the lamp control safety power consumption as the light intensity decrement, and decrease the light intensity of the white light supplemental lamp based on the light intensity decrement.

Step 408: switch the IR-CUT filter to a full transmittance spectral filter.

When the full transmittance spectral filter is in operation, infrared light is allowed to pass through, which enables the image sensor of the monitoring equipment to make full use of all light, effectively improving performance in low illuminance and making night vision clearer.

Step 409: turn on the infrared light supplemental lamp and control the light intensity of the infrared light supplemental lamp to be the second target light intensity.

The second target light intensity may be light intensity corresponding to the difference between the lamp control safety power consumption and the current power consumption of the white light supplemental lamp.

Step 410: turn off the white light supplemental lamp.

In this way, the supplemental lamp is switched from a white light supplemental lamp to an infrared light supplemental lamp. During the process of switching the supplemental lamp, the infrared light supplemental lamp was turned on first and then the white light supplemental lamp was turned off, ensuring continuous supplemental lighting throughout the entire process. Next proceed to step 413.

Step 411: turn off the white light supplemental lamp.

Step 412: switch the IR-CUT filter to a full transmittance spectral filter.

For example, exposure may be temporarily turned off while the white light supplemental lamp is turned off in step 411, and then turned on when the supplemental lamp is switched to an infrared light supplemental lamp via switching of IR-CUT filter. In this way, overexposure of the image is avoided when switching from white light supplemental lamp to infrared light supplemental lamp.

Step 413: reset the saturation of the imaging picture to zero.

In this way, the imaging picture may be switched from colorful to black and white.

Step 414: enhance the light intensity of the infrared light supplemental lamp.

Specifically, the light intensity of the infrared light supplemental lamp may be enhanced by adjusting the AE or by using equal exposure.

The method for alarm service control provided in the embodiments of the present application may adaptively control the lamps in stages by using the rated lamp control safety power consumption based on image quality when the alarm termination is detected. Specifically, the first stage involves enhancing the light intensity of the white light supplemental lamp or weakening it to a certain extent, rather than turning off the white light supplemental lamp completely. Then, the second stage involves switching of IR-CUT filter and supplementing of the infrared light supplemental lamp and saturation clearing. Finally, the third stage involves light supplementing enhancement of infrared light, so that the imaging picture is supplemented throughout the entire process, avoiding the problem of black screen and improving the image quality of the imaging picture. Moreover, the light intensity of the supplemental lamp may be adaptively adjusted according to the real-time power consumption, which improves the exposure smoothness when the alarm is triggered and further improves the image quality of the imaging picture.

An apparatus for alarm service control provided in the present application is described below. The apparatus for alarm service control described below may be referred to in correspondence with the method for alarm service control described above.

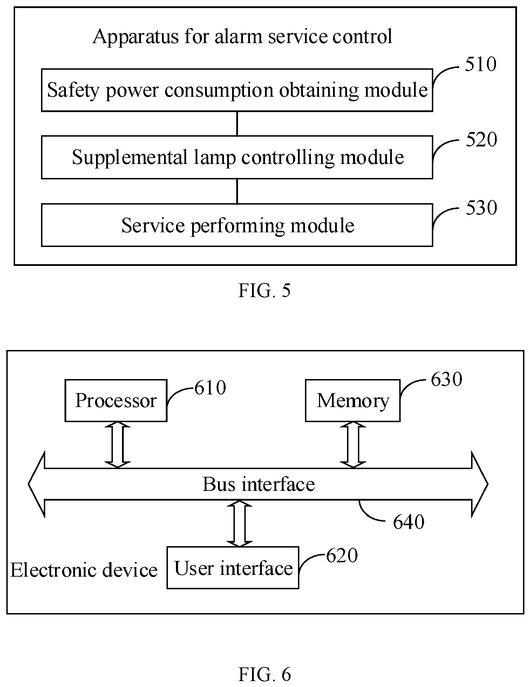

FIG. 5 is a schematic structural diagram of an apparatus for alarm service control according to an embodiment of the present application. As shown in FIG. 5, the apparatus for alarm service control includes: a safety power consumption obtaining module 510, configured for, in case of detecting alarm command information, obtaining rated lamp control safety power consumption; where the alarm command information is used for indicating to switch an imaging picture of a monitoring device from a first imaging color to a second imaging color, and to switch a supplemental lamp from a first supplemental lamp to a second supplemental lamp, where one of the first supplemental lamp and second supplemental lamp is a white light supplemental lamp; a supplemental lamp controlling module 520, configured for, in case of determining that the lamp control safety power consumption is greater than switching power consumption of an infrared cut filter, controlling the white light supplemental lamp to be in an on state, and controlling light intensity of the white light supplemental lamp in the on state based on the lamp control safety power consumption, power consumption of the first supplemental lamp, and pre-start power consumption of the second supplemental lamp; and a service performing module 530, configured for, in case that the white light supplemental lamp is in the on state, performing alarm service process corresponding to the alarm command information.

In an embodiment, the alarm command information is an alarm trigger command, the first imaging color is black and white, the second imaging color is colorful, the first supplemental lamp is an infrared light supplemental lamp, and the second supplemental lamp is the white light supplemental lamp. Accordingly, the service performing module 530 may include: a first turning off module, configured for turning off infrared light supplemental lamp; and a first switching module, configured for controlling the infrared cut filter to perform a first switching action to cut off infrared light and restore saturation of the imaging picture to saturation of a colorful image.

In an embodiment, the supplemental lamp controlling module 520 may include: a first control unit, configured for, in case that the first total power consumption of the power consumption of the first supplemental lamp, the pre-start power consumption of the second supplemental lamp and the switching power consumption is less than the lamp control safety power consumption, determining the light intensity corresponding to the pre-start power consumption of the second supplemental lamp as a first target light intensity of the white light supplemental lamp, and controlling the light intensity of the white light supplemental lamp in the on state to be the first target light intensity before the infrared light supplemental lamp is turned off.

In an embodiment, the supplemental lamp controlling module 520 further includes: a second control unit configured for: in case that the first total power consumption is greater than or equal to the lamp control safety power consumption, determining safety headroom power consumption of the white light supplemental lamp based on the lamp control safety power consumption and current power consumption of the first supplemental lamp; and determining the first target light intensity of the white light supplemental lamp based on the safety headroom power consumption and the pre-start power consumption of the second supplemental lamp, and controlling the light intensity of the white light supplemental lamp in the on state to be the first target light intensity before the infrared light supplemental lamp is turned off.

In an embodiment, the alarm command information is an alarm termination command, the first imaging color is colorful, the second imaging color is black and white, the first supplemental lamp is the white light supplemental lamp, and the second supplemental lamp is an infrared light supplemental lamp. Accordingly, the service performing module 530 may include: a second switching unit, configured for controlling the infrared cut filter to perform a second switching action to pass through infrared light; an intensity determining unit, configured for determining a second target light intensity of the infrared light supplemental lamp based on the lamp control safety power consumption and current power consumption of the white light supplemental lamp; a third control unit, configured for turning on the infrared light supplemental lamp and controlling the light intensity of the infrared light supplemental lamp to be the second target light intensity; and a fourth control unit, configured for turning off the white light supplemental lamp and resetting saturation of the imaging picture to zero.

In an embodiment, the supplemental lamp controlling module 520 may include: a fifth control unit configured for: in case that second total power consumption of the power consumption of the first supplemental lamp, the pre-start power consumption of the second supplemental lamp and the switching power consumption is less than the lamp control safety power consumption, determining the pre-start power consumption of the second supplemental lamp as power consumption increment of the white light supplemental lamp, and determining first light intensity increment of the white light supplemental lamp based on the power consumption increment; and enhancing the light intensity of the white light supplemental lamp based on the first light intensity increment to obtain the light intensity of the white light supplemental lamp in the on state.

In an embodiment, the supplemental lamp controlling module 520 further includes: a sixth control unit configured for: in case that the second total power consumption is greater than or equal to the lamp control safety power consumption, and a third total power consumption of the power consumption of the first supplemental lamp and the switching power consumption is less than the lamp control safety power consumption, determining second light intensity increment of the white light supplemental lamp based on the lamp control safety power consumption and the third total power consumption; and enhancing the light intensity of the white light supplemental lamp based on the second light intensity increment to obtain the light intensity of the white light supplemental lamp in the on state.

In an embodiment, the supplemental lamp controlling module 520 further includes: a seventh control unit configured for: in case that the third total power consumption is greater than or equal to the lamp control safety power consumption, determining light intensity decrement of the white light supplemental lamp based on the lamp control safety power consumption and the third total power consumption;
decreasing the light intensity of the white light supplemental lamp based on the light intensity decrement to obtain the light intensity of the white light supplemental lamp in the on state.

FIG. 6 illustrates a schematic structural diagram of an electronic device. As shown in FIG. 6, the electronic device may include: a processor 610, a communication interface 620, a memory 630, and a communication bus 640, where the processor 610, the communication interface 620, and the memory 630 communicate with each other through the communication bus 640. The processor 610 may call logical instructions in the memory 630 to execute the method for alarm service control provided in any of the above method embodiments.

Furthermore, the logic instructions in the aforementioned memory 630 may be implemented as software functional units and, when sold or used as independent products, may be stored in a computer-readable storage medium. Based on such understanding, the solutions of the present application in essence or a part of the solutions that contributes to the related art, or part of the solutions, may be embodied in the form of a software product, which is stored in a storage medium, including several instructions to cause a computer device (which may be a personal computer, server, or network device, etc.) to perform all or part of the steps of the methods described in the respective embodiments of the present application. The storage medium described above includes various media that may store program codes such as USB flash disk, mobile hard disk, read-only memory (ROM), random access memory (RAM), magnetic disk, or optical disk.

On the other hand, the present application also provides a computer program product, which includes a computer program that may be stored on a computer-readable storage medium. When the computer program is executed by a processor, the computer may execute the method for alarm service control provided in any of the above method embodiments.

In another aspect, the present application also provides a non-transitory computer-readable storage medium having a computer program stored thereon, which, when executed by a processor, implements the method for alarm service control as described above.

For example, computer-readable storage media include non-transitory computer-readable storage media.

The apparatus embodiments described above are merely illustrative. The units described as separate components may or may not be physically separate. The components shown as units may or may not be physical units, that is, they may be located in one place or distributed across multiple network units. Some or all of the modules may be selected to achieve the purpose of the embodiment according to actual needs. Those skilled in the art may understand and implement this without any creative effort.

Through the above description of the embodiments, those skilled in the art may clearly understand that each embodiment may be implemented by means of software plus necessary general-purpose hardware platform, or of course by hardware. Based on this understanding, the above technical solution, in essence or the part that contributes to the related art, may be embodied in the form of a software product. This computer software product may be stored in a computer-readable storage medium, such as ROM/RAM, magnetic disk, optical disk, etc., and includes several instructions to cause a computer device (which may be a personal computer, server, or network device, etc.) to execute the methods described in each embodiment or some parts of the embodiments.

Finally, it should be noted that the above embodiments are only used to illustrate the technical solutions of the present application, and are not intended to limit them. Although the present application has been described in detail with reference to the foregoing embodiments, those skilled in the art should understand that modifications may still be made to the technical solutions described in each of the foregoing embodiments, or equivalent substitutions may be made to some of the technical features. Such modifications or substitutions do not cause the essence of the corresponding technical solutions to deviate from the spirit and scope of the technical solutions of each embodiment of the present application.

## Claims

1. A method for alarm service control, comprising:
in case of detecting alarm command information, obtaining rated lamp control safety power consumption; wherein the alarm command information is used for indicating to switch an imaging picture of a monitoring device from a first imaging color to a second imaging color, and to switch a supplemental lamp from a first supplemental lamp to a second supplemental lamp, wherein one of the first supplemental lamp and second supplemental lamp is a white light supplemental lamp;
in case of determining that the lamp control safety power consumption is greater than switching power consumption of a double filter switcher, controlling the white light supplemental lamp to be in an on state, and controlling light intensity of the white light supplemental lamp in the on state based on the lamp control safety power consumption, power consumption of the first supplemental lamp, and pre-start power consumption of the second supplemental lamp; and
in case that the white light supplemental lamp is in the on state, performing an alarm service process corresponding to the alarm command information.

2. The method of claim 1, wherein the alarm command information is an alarm trigger command, the first imaging color is black and white, the second imaging color is colorful, the first supplemental lamp is an infrared supplemental lamp, and the second supplemental lamp is the white light supplemental lamp;
wherein performing the alarm service process corresponding to the alarm command information comprises:
turning off the infrared supplemental lamp; and
controlling the double filter switcher to perform a first switching action to cut off infrared light and restore saturation of the imaging picture to saturation of a colorful image.

3. The method of claim 2, wherein controlling the light intensity of the white light supplemental lamp in the on state based on the lamp control safety power consumption, the power consumption of the first supplemental lamp, and the pre-start power consumption of the second supplemental lamp comprises:
in case that a first total power consumption of the power consumption of the first supplemental lamp, the pre-start power consumption of the second supplemental lamp and the switching power consumption is less than the lamp control safety power consumption, determining light intensity corresponding to the pre-start power consumption of the second supplemental lamp as a first target light intensity of the white light supplemental lamp, and controlling the light intensity of the white light supplemental lamp in the on state to be the first target light intensity before the infrared light supplemental lamp is turned off.

4. The method of claim 3, further comprising:
in case that the first total power consumption is greater than or equal to the lamp control safety power consumption, determining safety headroom power consumption of the white light supplemental lamp based on the lamp control safety power consumption and current power consumption of the first supplemental lamp; and
determining the first target light intensity of the white light supplemental lamp based on the safety headroom power consumption and the pre-start power consumption of the second supplemental lamp, and controlling the light intensity of the white light supplemental lamp in the on state to be the first target light intensity before the infrared light supplemental lamp is turned off.

5. The method of claim 1, wherein the alarm command information is an alarm termination command, the first imaging color is colorful, the second imaging color is black and white, the first supplemental lamp is the white light supplemental lamp, and the second supplemental lamp is an infrared light supplemental lamp;
wherein performing the alarm service process corresponding to the alarm command information comprises:
controlling the double filter switcher to perform a second switching action to allow infrared light to pass through;
determining a second target light intensity of the infrared light supplemental lamp based on the lamp control safety power consumption and current power consumption of the white light supplemental lamp;
turning on the infrared light supplemental lamp and controlling light intensity of the infrared light supplemental lamp to be the second target light intensity; and
turning off the white light supplemental lamp and resetting saturation of the imaging picture to zero.

6. The method of claim 5, wherein controlling the light intensity of the white light supplemental lamp in the on state based on the lamp control safety power consumption, the power consumption of the first supplemental lamp, and the pre-start power consumption of the second supplemental lamp comprises:
in case that a second total power consumption of the power consumption of the first supplemental lamp, the pre-start power consumption of the second supplemental lamp and the switching power consumption is less than the lamp control safety power consumption, determining the pre-start power consumption of the second supplemental lamp as a power consumption increment of the white light supplemental lamp, and determining a first light intensity increment of the white light supplemental lamp based on the power consumption increment; and
enhancing the light intensity of the white light supplemental lamp based on the first light intensity increment to obtain the light intensity of the white light supplemental lamp in the on state.

7. The method of claim 6, further comprising:
in case that the second total power consumption is greater than or equal to the lamp control safety power consumption, and a third total power consumption of the power consumption of the first supplemental lamp and the switching power consumption is less than the lamp control safety power consumption, determining a second light intensity increment of the white light supplemental lamp based on the lamp control safety power consumption and the third total power consumption; and
enhancing the light intensity of the white light supplemental lamp based on the second light intensity increment to obtain the light intensity of the white light supplemental lamp in the on state.

8. The method of claim 7, further comprising:
in case that the third total power consumption is greater than or equal to the lamp control safety power consumption, determining a light intensity decrement of the white light supplemental lamp based on the lamp control safety power consumption and the third total power consumption; and
decreasing the light intensity of the white light supplemental lamp based on the light intensity decrement to obtain the light intensity of the white light supplemental lamp in the on state.

9. An alarm service control apparatus, comprising:
a safety power consumption obtaining module, configured for, in case of detecting alarm command information, obtaining rated lamp control safety power consumption; wherein the alarm command information is used for indicating to switch an imaging picture of a monitoring device from a first imaging color to a second imaging color, and to switch a supplemental lamp from a first supplemental lamp to a second supplemental lamp, wherein one of the first supplemental lamp and second supplemental lamp is a white light supplemental lamp;
a supplemental lamp controlling module, configured for, in case of determining that the lamp control safety power consumption is greater than switching power consumption of an double filter switcher, controlling the white light supplemental lamp to be in an on state, and controlling light intensity of the white light supplemental lamp in the on state based on the lamp control safety power consumption, power consumption of the first supplemental lamp, and pre-start power consumption of the second supplemental lamp; and
a service performing module, configured for, in case that the white light supplemental lamp is in the on state, performing an alarm service process corresponding to the alarm command information.

10. An electronic device, comprising a memory, a processor, and a computer program stored in the memory and executable on the processor, wherein the processor executes the computer program to implement the method for alarm service control of any of claims 1 to 8.
